# EUROPEAN PATENT APPLICATION

(11) **EP 2 182 283 A2**
(43) Date of publication of application: **05.05.2010**
(21) Application number: 09174411.0
(22) Date of filing: 29.10.2009
(51) Int. Cl.: F23L 7/00, F23C 9/00, F23N 5/00

(54) **Oxyfuel combustion boiler plant and control method for the same**

(30) Priority: 31.10.2008 JP 2008280674
(71) Applicant: Hitachi Ltd., Tokyo 100-8280 (JP)
(72) Inventor: Yamada, Akihiro, Chiyoda-ku, Tokyo 100-8220 (JP); Shibata, Tsuyoshi, Chiyoda-ku, Tokyo 100-8220 (JP); Hayashi, Yoshiharu, Chiyoda-ku, Tokyo 100-8220 (JP); Handa, Masato, Chiyoda-ku, Tokyo 100-8220 (JP)
(74) Representative: MERH-IP Matias Erny Reichl Hoffmann

(57) **Abstract**

An oxyfuel combustion boiler plant comprising burners 210, 220, 225 arranged in a plurality of stages in a height direction of a furnace for injecting fuel and gas including oxygen supply system 401 for supplying oxygen to the burners, a flue gas circulation system 402 for returning a part of boiler flue gas discharged from the boiler to the burners as circulation flus gas, and a carbon dioxide collection device 350 for collecting carbon dioxide from a reminder of the boiler flue gas, **characterized in that**
the oxyfuel combustion boiler plant further comprising: an oxygen flow rate decision device 136 or a circulation flue gas flow rate decision device 138 capable of adjusting at least one of a flow rate of the oxygen and a flow rate of the circulation flue gas supplied to the burners for each of the

## Description

### BACKGROUND OF THE INVENTION

### (Field of the Invention)

The present invention relates to an oxyfuel combustion boiler plant and a control method for it.

### (Description of Related Art)

As a method for burning fuel in a boiler, there are a method using air (air combustion) and a method using highly purity oxygen (oxyfuel combustion) available. And, compared with the air combustion, the oxyfuel combustion can easily collect carbon dioxide. However, when burning fuel only with oxygen, compared with the air combustion, a flame is at a high temperature, so that the oxyfuel combustion recirculates flue gas of the boiler to the boiler.

Patent Document 1 discloses a method for controlling the circulation flue gas flow rate of boiler flue gas so as to increase the entire heat collection amount of the boiler to a target heat collection amount.

Patent Document 1: Japanese Patent Laid-open 2007-147162

### SUMMARY OF THE INVENTION

The technology of Patent Document 1 controls the oxygen supply amount to be supplied to the main unit of the boiler on the basis of the oxygen content of all the gases of recirculation flue gas and oxygen. Therefore, when there is a plurality of stages of burners arranged in the boiler, depending on the position of the burner stages, there are possibilities that the temperature of the water wall tubes installed in the furnace may exceed the allowable design temperature.

Therefore, the present invention provides an oxyfuel combustion boiler having a plurality of stages of burners in order to reduce the region where the temperature of the water wall tubes of the furnace exceeds the allowable design temperature.

The present invention of an oxyfuel combustion boiler plant has an oxygen flow rate decision device or a circulation flue gas flow rate decision device which can adjust at least one of oxygen flow rate and circulation flue gas flow rate which are supplied to burners on every burner stage.

According to the present invention, in the oxyfuel combustion boiler having a plurality of stages of burners, the region where the temperature of the water wall tubes of the furnace is higher than the allowable design temperature can be reduced.

### BRIEF DESCRIPTION OF THE DRAWINGS

Fig. 1 is a drawing for explaining the constitution of an oxyfuel combustion boiler plant relating to a first embodiment of the present invention.
Fig. 2 is a drawing for explaining the constitution of the water-steam system of the embodiment shown in Fig. 1.
Fig. 3A is a drawing for explaining the structure of the boiler furnace of the embodiment shown in Fig. 1.
Fig. 3B is a drawing for explaining the constitution of the oxygen supply system and circulation flue gas supply system to the burners shown in Fig. 1.
Fig. 4 is a drawing for explaining an effect example of the reheat steam temperature control in the embodiment shown in Fig. 1.
Fig. 5 is a drawing for explaining a constitution example of the valve opening angle setting device in the embodiment shown in Fig. 1.
Fig. 6 is a drawing for explaining a constitution example of the control apparatus in the embodiment shown in Fig. 1.
Fig. 7 is a schematic diagram of the path of the water wall tubes installed on the water wall in a second embodiment of the present invention.
Fig. 8 is a drawing showing an example of the steam temperature distribution at the water wall exit in the Fig. 7 of the second embodiment.
Fig. 9 is a drawing showing an example of the burner group when setting the flow rates of oxygen and circulation flue gas in the second embodiment.
Fig. 10 is a drawing showing an effect example of the smoothing of the water wall exit steam temperature distribution when adjusting the flow rates of oxygen and circulation flue gas shown in Fig. 9 of the second embodiment.
Fig. 11 is a drawing for explaining a constitution example of the control apparatus in a third embodiment of the present invention.

### DETAILED DESCRIPTION OF THE PREFERRED EMBODIMENTS

The oxyfuel combustion boiler produces carbon dioxide (CO₂) almost from flue gas. Therefore, when collecting carbon dioxide from flue gas, there is no need to thicken carbon dioxide and the flue gas is cooled as it is, thus the carbon dioxide can be liquefied and separated. The oxyfuel combustion boiler is one of the effective methods of reducing the carbon oxygen discharge amount.

Further, nitrogen occupying about 80% of air is not supplied to the boiler, so that a nitrogen oxide (thermal NOx) generated from nitrogen in air is not generated and a reduction effect of nitrogen oxide is expected.

However, the oxyfuel combustion boiler burns fuel using highly-purity oxygen instead of air. Therefore, when only oxygen is used, the flame temperature rises excessively high and there is a risk of damage to the burners and the furnace wall of the boiler. Therefore, a method of circulating a part of flue gas of the boiler, mixing it with oxygen, thereby burning it is proposed.

### Embodiment 1

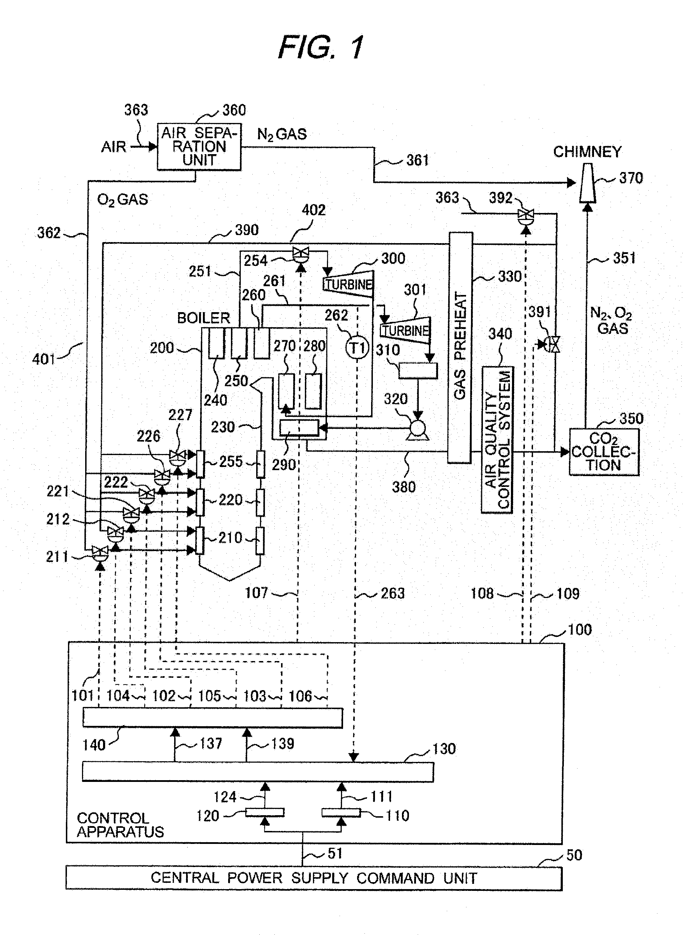

Fig. 1 its a drawing showing the oxyfuel combustion boiler plant using coal as fuel and the control apparatus of a first embodiment in the present invention. A control apparatus 100 of the present embodiment receives measurement information of the process value from the oxyfuel combustion boiler of the plant to be controlled, performs preprogrammed operations, and transmits an operation command signal (control signal) to the plant to be controlled. The plant, according to the received operation command signal, for example, operates an actuator of the valve opening angle or damper opening angle.

The present embodiment is an oxyfuel combustion boiler plant including main components such as a boiler 200, a high-pressure steam turbine 300 and an intermediate-low pressure steam turbine 301 driven by steam generated by the boiler 200. The control apparatus 100 receives a load command 51 from a central power supply command unit 50 and on the basis of the load command 51, controls the plant in a specified load (electric output) state. And, the control apparatus 100 outputs an adjusting valve opening angle command 107 and adjusts the valve opening angle of a steam control valve 254. If the steam control valve 254 is adjusted, the steam flow rate led to the high-pressure steam turbine 300 is changed and the electric output is changed.

Further, the water-steam system includes a condenser 310 for cooling steam from the intermediate-low pressure steam turbine 301 to a liquid and a feed water pump 320 for sending again the water cooled by the condenser 310 to the boiler 200 as supply water to the boiler. Further, the water-steam system includes a supply water heater for preheating the supply water to the boiler using a part of steam (extracted steam) pulled out from the middle stage of the high-pressure steam turbine 300 and the intermediate-low pressure steam turbine 301 as a heating source.

On the other hand, the system of combustion gas 380 discharged from the boiler includes a gas preheater 330, an air quality control system 340 for purifying flue gas, a carbon dioxide collection device 350 for cooling, liquefying, and collecting carbon dioxide included in flue gas, and a chimney 370 for discharging gas 351 composed of mainly nitrogen and oxide retaining after collection of carbon dioxide.

The present embodiment aims at a boiler of the oxyfuel combustion method of burning fuel using gas including high-purity oxygen and a plant including the boiler of the oxyfuel combustion method.

Therefore, the oxyfuel combustion boiler plant of the present embodiment includes an ASU (air separation unit) 360 for separating air to gas including mainly nitrogen and gas including mainly oxygen and manufacturing high-purity oxygen. The air separation unit 360 is of a method of cooling and separating air using a difference in the boiling point between oxygen and nitrogen. The present embodiment does not depend on the oxygen manufacturing method. Therefore, other methods such as a membrane separation method of separating air using a difference in the size between the nitrogen molecules and the oxygen molecules may be used.

The air separation unit 360 separates air to high-purity oxygen gas 362 and gas 361 including nitrogen mainly. The gas including mainly nitrogen 361 is discharged into the atmosphere from the chimney 370.

The oxygen supply system 401 is a system that the air separation unit 360 is connected to the burners 210, 220, and 225 and supplies oxygen to the burners. If fuel is burned with high-purity oxygen, the flame temperature becomes excessively high. And, there are possibilities of causing damage to the burners and the furnace wall of the boiler. Therefore, the high-purity oxygen 362 manufactured by the air separation unit 360 is mixed with a part of flue gas (circulation flue gas 390) discharged from the boiler 200 and is supplied to the burners 210, 220, and 225.

The flue gas circulation system 402 is a system installed so as to return a part of flue gas 390 discharged from the boiler 200 to the burners. The circulation flue gas 390 takes out a part of flue gas purified by the air quality control system 340 and raises it in temperature by the gas preheater 330. The control apparatus 100 transmits a valve opening angle command 109, changes the opening angle of a circulation flue gas flow rate regulating valve 391, and adjusts the flow rate of circulation flue gas.

The boiler 200 has three stages of the upper stage burner 225, medium stage burner 220, and lower stage burner 210 sequentially from above in the direction of the furnace height. The control apparatus 100, on the basis of valve opening angle commands 101, 102, and 103 from the control apparatus 100, controls the opening angles of the oxygen flow rate regulating valves 211, 221, and 226, thereby can adjust the flow rate of the oxygen gas 362 supplied to the respective burner stages. Further, the circulation flue gas 390, similarly on the basis of valve opening angle commands 104, 105, and 106, controls the opening angles of the burner flue gas flow rate regulating valves 212, 222, and 227, thereby can adjust the respective flow rates.

In the oxyfuel combustion boiler of the present embodiment, compared with the air combustion method, nitrogen occupying about 80% of air is not supplied to the boiler. Therefore, a nitrogen oxide (thermal NOx) mainly originated in nitrogen in air is generated little and the discharge amount of nitrogen oxide is reduced. Further, most of carbon in fuel is changed to carbon dioxide by combustion, so that flue gas becomes high-concentration carbon dioxide gas. Therefore, compared with the case that carbon dioxide is cooled and collected from flue gas of the boiler of the air combustion method, the oxyfuel combustion boiler does not require a step of thickening carbon dioxide, so that it is a system suited to collection of carbon dioxide.

The furnace of the boiler 200 has burners for burning fuel, so that the inner temperature of the furnace becomes high. Therefore, there is a cooling wall named as a water wall 230 for cooling the overall wall surface and collecting heat of combustion gas. In addition, inside the boiler 200, there is a heat exchanger composed of the fuel economizer 290, primary superheater 280, secondary superheater 240, tertiary superheater 250, primary reheater 270, and secondary reheater 260 and these heat exchangers collect heat of combustion gas and generates high-temperature steam.

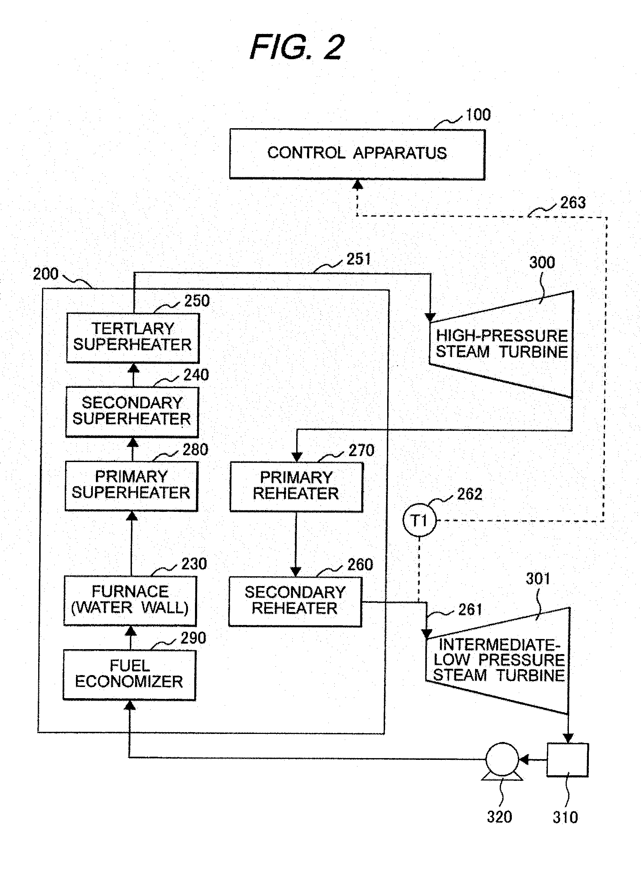

Fig. 2 shows the flow of steam in the embodiment of the oxyfuel combustion boiler plant. Supply water of the boiler is firstly led to the fuel economizer 290, then is raised in temperature during passing through sequentially the water wall 230, primary superheater 280, secondary superheater 240, and tertiary superheater 250, and enters the high-pressure steam turbine 300 as main steam 251. The steam which works in the high-pressure steam turbine 300 and is lowered in temperature and pressure is reheated by the primary reheater 270 and secondary reheater 260 and enters the intermediate-low pressure steam turbine 301.

Further, the oxyfuel combustion boiler cannot obtain the power (electric power) for driving the air separation unit 360 at the start time, so that it must be started by the air combustion method. When operating the oxyfuel combustion boiler by the air combustion method, the control apparatus 100 issues the circulation flue gas flow rate regulating valve opening angle command 109, closes the circulation flue gas flow rate regulating valve 391, issues the air flow rate regulating valve opening angle command 108, and opens the air flow rate regulating valve 392. By this adjustment, air 363 can be supplied to the boiler 200 through the flue gas circulation system 402 instead of flue gas, thus the boiler 200 can execute combustion using air.

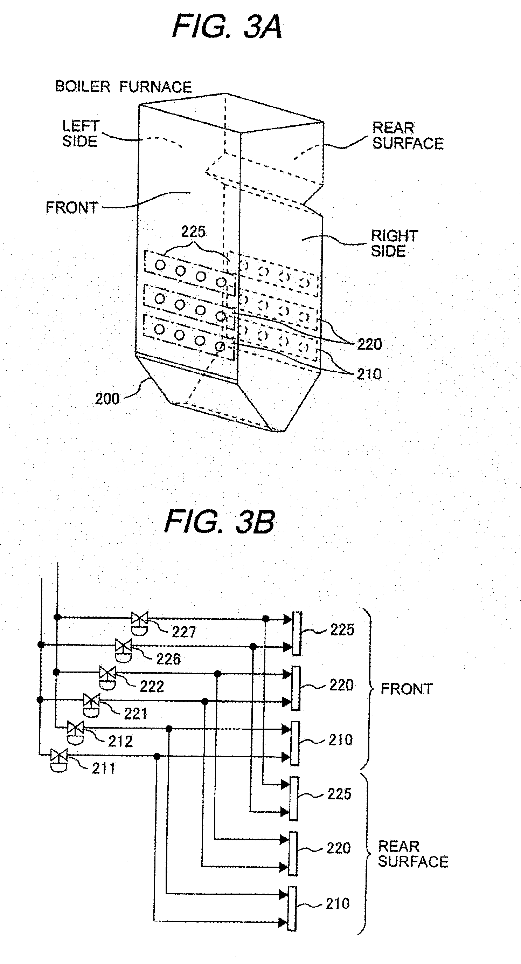

Fig. 3A and Fig. 3B show the burner arrangement of the boiler furnace in the present embodiment. The three stages of the burners 210, of and 225 are installed in the height direction respectively on the front and back of the furnace. To the respective stages, oxygen and circulation flue gas which are adjusted in the flow rate by the oxygen flow rate regulating valves 211, 221, and 226 and the burner flue gas flow rate regulating valves 212, 222, and 227 are supplied.

Fig. 1 shows the pipes of the oxygen and circulation flue gas on the front of the furnace, while Fig. 3B shows also the pipes connected to the burners on the back side. The pipes connected to the burners on the back side branch the pipes on the front for each stage. Therefore, the oxygen amount and oxygen concentration supplied to each burner stage can be adjusted independently of each other.

Further, the burners 210, 220, and 225 respectively have a fuel supply path (not shown). One pulverizer (a coal pulverizer) on each of the front and back of each of the burner stages, that is, six pulverizers in total supply pulverized coal to the burners. In Fig. 1, the control apparatus 100, on the basis of the load command 51, decides the fuel amount corresponding to the target value of the electric output and distributes the fuel amount equally to each burner.

So that the fuel supplied to the burners are burned stably and nitrogen oxide and carbon monoxide generated by combustion are reduced as far as possible, the oxygen amount is set beforehand. And, in correspondence to the fuel amount supplied to the burners, the supply amount of oxygen is decided. The control apparatus 100 outputs the opening angle commands 101, 102, and 103 to the oxygen flow rate regulating valves 211, 221, and 226 and controls the oxygen flow rate regulating valves 211, 221, and 226.

On the other hand, the flow rate of circulation flue gas is preset in accordance with the load command or the fuel supply amount. The control apparatus 100 transmits the valve opening angle command 109 for the circulation flue gas amount, controls the circulation flue gas flow rate regulating valve 391, and supplies a predetermined amount of flue gas to the furnace. Further, the control apparatus 100 issues the opening angle commands 104, 105, and 106, controls the burner flue gas regulating valves 212, 222, and 227 at each stage, and distributes circulation flue gas to each burner stage.

In the present embodiment, the fuel flow rate decision device 120 of the control apparatus 100, on the basis of the load command 51, decides the fuel amount supplied to burners from each. A fuel flow rate signal 124 output from the fuel flow rate decision device 120 is input to the gas flow rate control device 130.

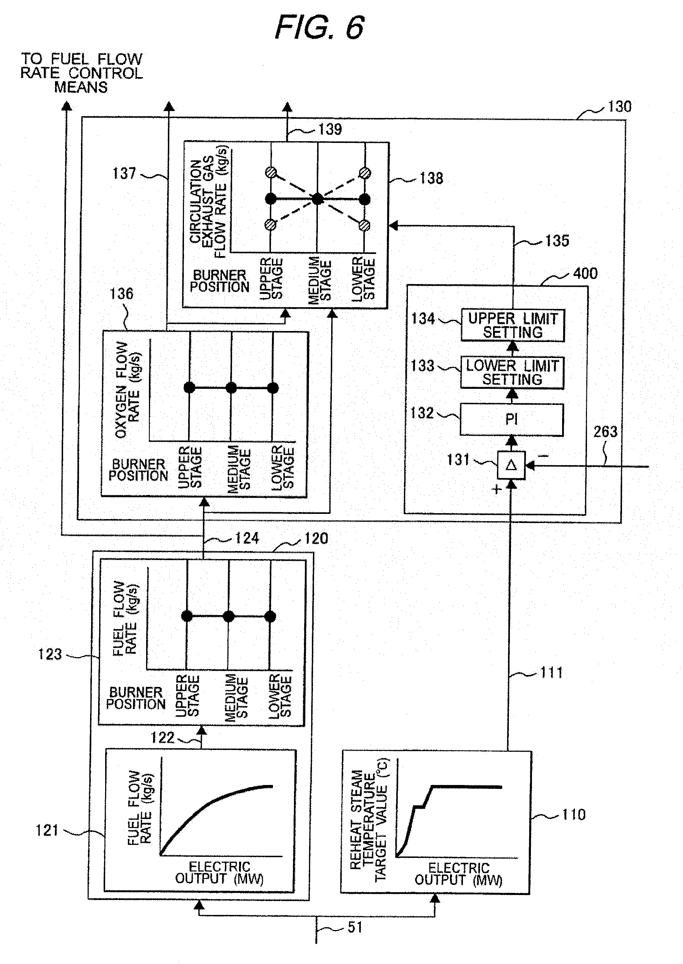

Fig. 6 is a drawing showing the constitution of the control unit of the control apparatus 100 in the present embodiment. The gas flow rate control device 130 includes an oxygen flow rate decision device 136 for deciding the oxygen flow rate according to the relation preset in correspondence to the fuel flow rate and a circulation flue gas flow rate decision device 138 for deciding the circulation flue gas flow rate. The oxygen flow rate decision device 136 and circulation flue gas flow rate decision device 138 of the gas flow rate control device 130 respectively output an oxygen flow rate signal 137 and a circulation flue gas flow rate signal 139 and input them to the valve opening angle setting device 140.

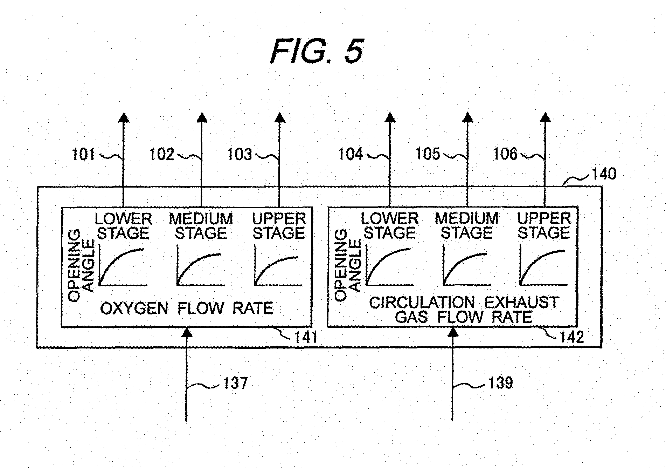

Fig. 5 is a drawing showing the constitution of the valve opening angle setting device 140 of the control apparatus 100 in the present invention. The valve opening angle setting device 140 includes an oxygen flow rate regulating device 141 for regulating the oxygen flow rate supplied to each burner stage and a circulation flue gas flow rate regulating device 142 for regulating the circulation flue gas flow rate supplied to each burner stage. So that the oxygen flow rate supplied to each burner stage coincides with the oxygen flow rate required by the oxygen flow rate signal 137 on the basis of the relation between the preset valve opening angle of the oxygen flow rate regulating valves 211, 221, and 226 and the flow rate, the oxygen flow rate regulating device 141 decides the valve opening angles. Similarly, so that the circulation flue gas flow rate supplied to each burner stage coincides with the circulation flue gas flow rate required by the circulation flue gas flow rate signal 139 on the basis of the relation between the preset valve opening angle of the burner flue gas flow rate regulating valves 212, 222, and 227 and the flow rate, the circulation flue gas flow rate regulating device 142 decides the valve opening angles. The decided opening angles of the respective valves are transferred to the valves as the opening angle commands 101, 102, and 103 and 104, 105, and 106.

In the present embodiment, the fuel flow rate is distributed equally regardless of the height of each burner stage and the front and back and the oxygen amount supplied to each burner stage is distributed equally in correspondence to the fuel amount. On the other hand, the control apparatus 100 includes the circulation flue gas flow rate decision device 138 capable of adjusting the circulation flue gas flow rate for each burner stage. Therefore, the oxygen concentration of each burner stage can be changed.

If the circulation flue gas flow rate is increased, the oxygen concentration is reduced, while if the circulation flue gas flow rate is reduced, the oxygen concentration is increased. In the state of a low oxygen concentration, compared with the state of a high oxygen concentration, the overall gas amount is increased, so that the gas temperature when the same fuel amount is burned is apt to go down. Further, if the overall gas amount is large, the flow velocity of gas injected from the burners is increased, so that the gas injected from the burners can proceed easily toward the center of the furnace and the distance between the high temperature flame and the water wall 230 is apt to be longer.

Further, the heat transmission method from combustion gas to the water wall 230 includes convective heat transfer and radiative heat transfer. However, in the water wall portion, the gas temperature is high, so that the radiative heat transfer is dominant. The radiative heat transfer amount is greatly influenced by the temperature level of a high temperature substance. Therefore, in the state of a low oxygen concentration, the gas temperature is lower than that in the state of a high oxygen concentration, so that the radiative heat transfer amount is lowered. Namely, the heat transmission amount from a high-temperature flame or gas to the water wall 230 is reduced.

Further, if the position of the high-temperature flame is separated from the water wall, the effect of interrupting the radiant heat reaching the water wall by the gas existing between the flame and the water wall 230 is increased. Therefore, the state of a low oxygen concentration reduces the heat transmission amount to the water wall 230.

If the heat absorption amount of the water wall 230 is reduced, in correspondence to it, the gas temperature at the furnace exit rises. If the gas temperature at the furnace exit rises, the heat transmission amounts to the secondary reheater 260 positioned in the neighborhood of the furnace exit and the primary reheater 270 positioned on the downstream side thereof are increased. Therefore, the reheat steam temperature of reheat steam heated by the reheaters rises. Inversely, if the heat absorption amount of the water wall 230 is increased, the reheat steam temperature goes down.

However, if the circulation flue gas amount is increased simply so as to reduce the oxygen concentration, the overall gas amount is increased and the influence of lowering of the gas temperature is increased. Therefore, inversely to the above mentioned, there are possibilities that the gas temperature at the furnace may go down and the reheat steam temperature may go down. Therefore, the presents embodiment keeps the total amount of the circulation flue gas flow rate supplied to all the burner stages unchanged and adjusts the circulation flue gas flow rate for each burner stage. The control apparatus 100 adjusts the circulation flue gas flow rate, thereby can change the oxygen concentration at each burner stage.

As mentioned above, the control apparatus 100 has the circulation flue gas flow rate decision device 138 capable of adjusting the flow rate of circulation flue gas supplied to the burners for each burner stage, thus it can set the water wall 230 in the neighborhood of the burners to the allowable design temperature or lower. For example, when the circulation flue gas flow rates injected from the upper stage burner, the medium stage burner, and the lower stage burner are the same, there are possibilities that the water wall 230 in the neighborhood of the upper stage burner and medium stage burner may receive the flame of the lower stage burner and may become high in temperature. In this case, the circulation flue gas flow rate of the lower stage burner is increased higher than that of the upper stage burner by the circulation flue gas flow rate decision device 138. The oxygen concentration of the lower stage burner is reduced than that of the upper stage burner, so that the flame temperature of the lower stage burner goes down and the heat load on the water wall 230 of the upper stage and medium stage burners can be reduced.

Further, in the present embodiment, the reheat steam temperature instrument 262 outputs the reheat steam temperature measured value 263 to the gas flow rate control device 130. The reheat steam temperature measured value 263 indicates the temperature of the reheat steam flowing in the pipe connected the secondary reheater 260 and the intermediate-low pressure steam turbine 301. Further, the reheat steam temperature measured value 263 can be substituted for the pipe metal temperature of the secondary reheater 260 and the steam temperature immediately after discharged from the secondary reheater 260.

The gas flow rate control device 130 decides the circulation flue gas flow rate as indicated below.

When the reheat steam temperature measured value 263 is higher than the target value, the circulation flue gas flow rate decision device 138 distributes the flow rate of circulation flue gas to the respective burner stages so that the oxygen concentration of the lower stage burner becomes higher than that of the upper stage burner. Namely, the circulation flue gas flow rate decision device 138 distributes the circulation flue gas flow rate so that the circulation flue gas flow rate of the lower stage burner becomes lower than that of the upper stage burner.

By doing this, the high temperature region of combustion gas is formed in the neighborhood of the lower stage burner having a high oxygen concentration. The combustion gas transmits heat the water wall 230 during rising in the furnace. Therefore, the gas in the neighborhood of the lower stage burner close to the furnace bottom transmits heat to the water wall 230 for a longer period of time than the gas in the neighborhood of the upper stage burner. Therefore, as the position where the high temperature region is formed approaches the furnace bottom, the heat transmission amount to the water wall 230 is increased and the gas temperature at the furnace exit goes down. The gas temperature at the furnace exit goes down, thus the reheat steam temperature lowers and approaches the target value.

Inversely, when the reheat steam temperature measured value 263 is lower than the target value, the circulation flue gas flow rate decision device 138 distributes the flow rate of circulation flue gas so that the oxygen concentration of the upper stage burner becomes higher than that of the lower stage burner.

By doing this, the high-temperature region is formed in the neighborhood of the upper stage burner, so that the distance from the high-temperature region to the furnace exit becomes short and the heat transmission value to the water wall 230 is reduced. Therefore, the distribution functions so that the gas temperature at the furnace exit rises and the reheat steam temperature rises and approaches the target value.

The fuel flow rate decision device 121, on the basis of the relation between the electric output and the fuel flow rate which are preset, calculates a fuel flow rate signal 122 corresponding to the load command 51 and outputs it to a burner fuel flow rate decision device 123.

The burner fuel flow rate decision device 123 outputs the burner fuel flow rate signal 124 which is a result of distribution of the overall fuel flow rate based on the fuel flow rate signal 122 for each to the fuel flow rate control means, the oxygen flow rate decision device 136, and the circulation flue gas flow rate decision device 138. In the present embodiment, the fuel flow rate is distributed equally to all the s used.

Further, the fuel flow rate control means, on the basis of the burner fuel flow rate signal 124, controls the fuel flow rates supplied from the respective s to the burners.

The oxygen flow rate decision device 136, in correspondence to the burner fuel flow rate signal 124 which is a fuel flow rate command for each, on the basis of the relation between the fuel flow rate and the oxygen flow rate which are preset, decides the oxygen flow rate 137. The oxygen flow rate is set on the same basis for the fuel flow rate independently of the burner stage. Therefore, in the present embodiment that the fuel flow rate is distributed equally, the oxygen flow rate is also distributed equally.

To the circulation flue gas flow rate decision device 138, the burner fuel flow rate signal 124 and the oxygen flow rate 137 are input. In the circulation flue gas flow rate decision device 138, on the basis of the relation between the fuel flow rate and the oxygen flow rate, the corresponding oxygen concentration is set beforehand. Therefore, the circulation flue gas flow rate decision device 138 decides the basic value of the circulation flue gas flow rate. The oxygen concentration is set on the same basis for the fuel flow rate independently of the burner position. In the present embodiment, at every burner position, the basic value of the circulation flue gas flow rate is set equally.

However, the gas flow rate control device 130 of the present embodiment has a function of adjusting the distribution of the circulation flue gas flow rate according to the burner stage on the basis of the deviation between the reheat steam temperature measured value 263 and the target value thereof. The function controls the reheat steam temperature measured value 263 to the target value thereof.

In the reheat steam temperature target value decision device 110, the target value of the reheat steam temperature is set beforehand in correspondence to the electric output. The reheat steam temperature target value decision device 110 decides the reheat steam temperature target value 111 corresponding to the load command 51.

The gas flow rate control device 130 has a correction device 400 for correcting the circulation flue gas flow rate. Concretely, a subtracter 131 calculates the deviation between the reheat steam temperature target value 111 and the reheat steam temperature measured value 263 and outputs the deviation value to a proportional integration controlled 132. The proportional integration controller 132 outputs the distribution correction value of the circulation flue gas flow rate. The output correction value is limited to the range of the upper and lower limit values which are preset by a lower limit value setting unit 133 and an upper limit value setting unit 134 and then is input to the circulation flue gas flow rate decision device 138 as a correction signal 135.

The upper and lower limit values of the correction value are set in consideration of the safety of combustion by the burners, the limit of the flame temperature, the generation amount of nitrogen oxide or carbon monoxide in flue gas, and changes of the gas temperature.

The circulation flue gas flow rate decision device 138 corrects the basic value of the circulation flue gas flow rate distributed equally to the respective burners on the basis of the input correction signal 135. The correction signal 135 indicates the flow rate correction rate for the upper burner 225. Therefore, the correction function 400 increases or decreases the circulation flue gas flow rate of the upper stage burner 225 which is equivalent to the correction rate. The correction function 400 does not change the circulation flue gas flow rate for the medium stage burner 220 but decreases or increases the circulation flue gas flow rate for the lower stage burner by the same flow rate as the correction flow rate performed for the upper stage burner. By the correction function 400, the distribution of the circulation flue gas flow rate is formed in the vertical direction of the burner stages unless the total flow rate of the circulation flue gas flow rate is changed, so that the oxygen concentration can be changed in the vertical direction of the burner stages.

The circulation flue gas flow rate decision device 138 decides the final circulation flue gas flow rate signal 139 for each burner stage.

Further, the present embodiment, when changing the oxygen concentration of gas injected from the burners in the direction of the height of the furnace, does not limit the concrete decision methods of the oxygen flow rate and circulation flue gas flow rate to the aforementioned methods.

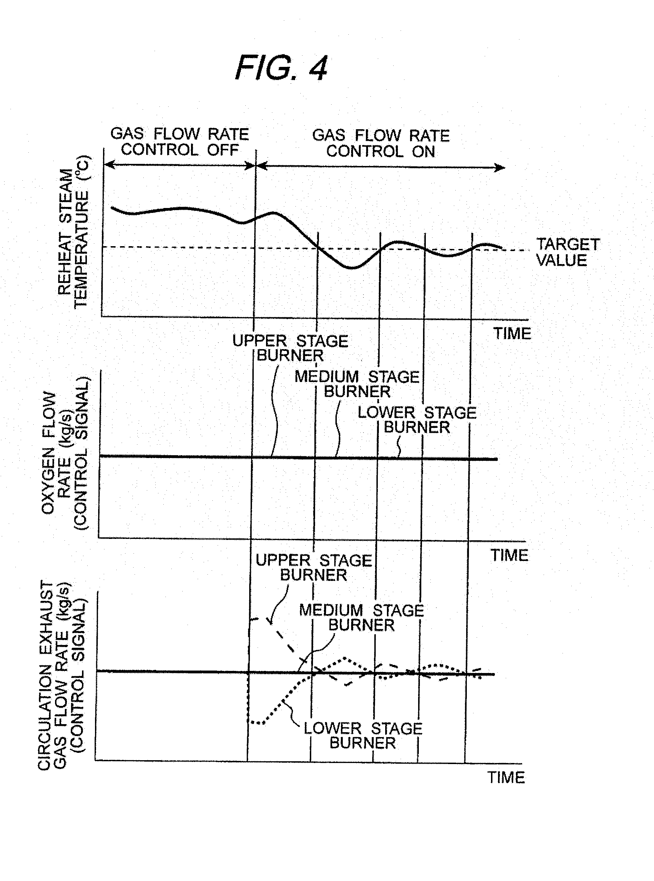

Fig. 4 shows a control example of the reheat steam temperature in the present embodiment. At the point of time when the gas flow rate control is executed in Fig. 4, the reheat steam temperature is higher than the target value. Therefore, the circulation flue gas flow rate decision device 138 distributes the circulation flue gas flow rate so that the circulation flue gas flow rate of the lower stage burner becomes lower than that of the upper stage burner. On the other hand, the oxygen flow rate output by the oxygen flow rate decision device 136 is the same for the respective upper stage, medium stage, and lower stage burners. By the control, the reheat steam temperature can be controlled to the neighborhood of the target value.

As mentioned above, the present embodiment, similarly to the boiler of the air combustion method, can control the temperature and pressure of steam supplied to the turbine from the boiler of the oxyfuel combustion method to predetermined values. The present embodiment is effective particularly in the temperature control of the reheat steam 261.

The control method for the reheat steam temperature in the present embodiment, compared with the control method for the reheat steam temperature of the air combustion boiler, has the following effects.
(1) There is no need to install a partition wall for partitioning the gas flow path of the heat recover area to the reheater side and superheater side and a damper for adjusting the flow rate distribution in order to permit combustion gas to pass through a plurality of gas paths partitioned by partition walls.
(2) There is no need to circulate a part of flue gas of the boiler to the bottom of the furnace, thereby adjust the gas temperature and gas amount in the furnace.
(3) There is no need to install a burner capable of changing the angle in the vertical direction in order to change the heat absorption amount in the furnace, thereby adjust the gas temperature at the furnace exit.
(4) There is no need to install a desuperheater for spraying low-temperature water in the middle of the reheater in order to adjust the reheat steam temperature.

Due to the effects of the items (1) and (2), there is no need to install the partition walls, damper, gas circulation fan, and long pipe for gas circulation and the cost of equipment can be reduced. Further, due to the effects of the items (1) and (3), there is no need to install a movable mechanism such as the damper and burners in the high-temperature boiler, and the cost can be reduced, and elongation and deformation due to temperature can be prevented, thus the reliability can be improved. Operation faults caused to the movable portion due to reformation and fixing, reduction in the control performance, and operation stop can be avoided. The effect of the item (4), since no spraying is executed, can suppress reduction in the plat efficiency.

As mentioned above, the oxyfuel combustion method of the present embodiment, unlike the air combustion method, can change the oxygen amount supplied to the burners and the oxygen concentration independently of each other. The present embodiment, by use of the characteristic, can suppress the increase in the cost of equipment to its minimum and control the reheat steam temperature.

Further, in the oxyfuel combustion boiler, the oxygen flow rate regulating valves 211, 221, and 226, the burner flue gas flow rate regulating valves 212, 222, and 227, and the pipes for branching oxygen and circulation flue gas for each burner stage are arranged mostly. The present embodiment applies these facilities, thereby suppresses additional devices and pipes to minimum, and can obtain the effects of the items (1) to (4), so that the cost can be decreased. Further, there is no need to install a movable portion such as a damper in high-temperature gas in the boiler, and the risk such as an operation fault of the movable portion is reduced, thus the reliability is improved.

Further, in the present embodiment, the burner fuel flow rate decision device 123 distributes the fuel flow rate equally to the respective burner stages. However, the fuel flow rate of each burner stage can be changed. Concretely, when the reheat steam temperature measured value 263 is higher than the reheat steam temperature target value 111, the burner fuel flow rate decision device 123 corrects the fuel flow rate so that the fuel flow rate of the lower stage burner is higher than that of the upper stage burner. Inversely, when the reheat steam temperature measured value 263 is lower than the reheat steam temperature target value 111, the burner fuel flow rate decision device 123 corrects the fuel flow rate so that the fuel flow rate of the upper stage burner is higher than that of the lower stage burner. If the fuel flow rate of each burner stage is changed like this, the controllability of the reheat steam temperature can be improved more.

Further, the number of burner stages set in the vertical direction may be other than 3. For example, when increasing the number of set burner stages to 4, if the circulation flue gas flow rates of the first and second stages from above are increased, so as to decrease by the circulation flue gas flow rates equivalent to the increased values, it is desirable to decrease the circulation flue gas flow rates of the third and fourth stages from above. Further, if the difference in the burner installation height between the upper stage and the lower stage is increased, the controllability of the reheat steam temperature may be improved.

### Embodiment 2

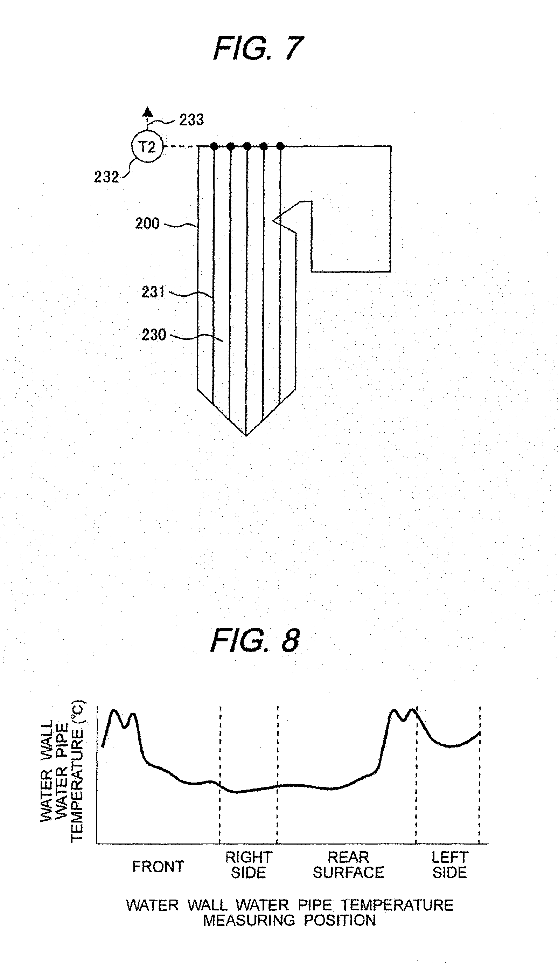

Fig. 7 shows schematically the path of water wall tubes 231 installed on the water wall 230 in the second embodiment of the present invention. The water wall tubes 231 are lined up vertically and a temperature instrument 232 for measuring the temperature at the exit position of the water wall tubes 231 is installed. In Fig. 7, the intervals between the water wall tubes are wide and the number of water wall tubes is small. However, the actual water wall tubes are arranged more closely.

Fig. 8 shows an example of the steam temperature distribution at the exit of the water wall tubes measured by the temperature instrument 232 in the Fig. 7 of the second embodiment. In the present embodiment, the temperature of the left side of the furnace is higher than that of the right side. If the temperature difference occurs like this, there are possibilities that the water pipe on the high-temperature side may exceed a predetermined allowable design temperature and may be damaged.

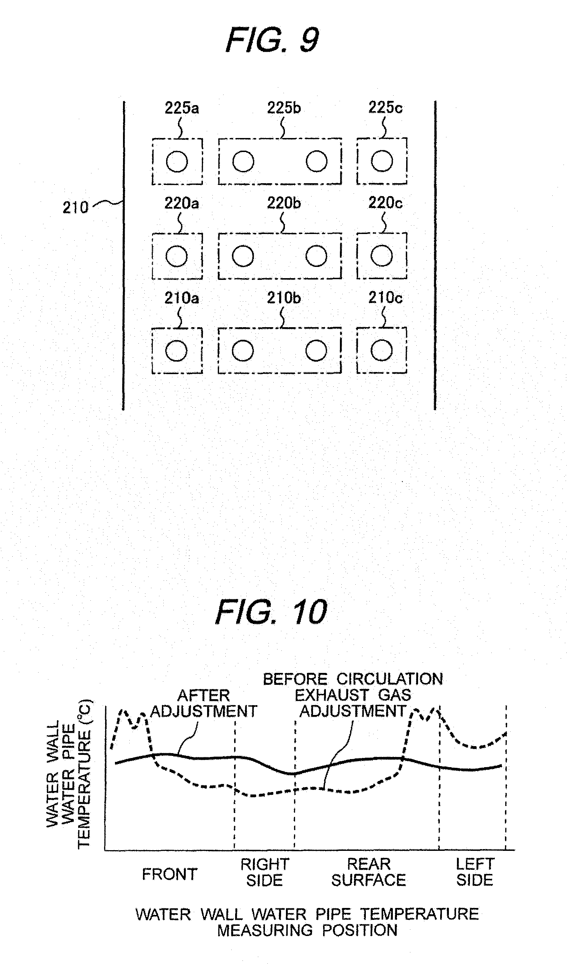

As shown in Fig. 3B, the first embodiment 1 adjusts the oxygen flow rate and circulation flue gas flow rate for each of the upper, medium, and lower burner stages, so that the respective pipes and flow rate regulating valves are structured for that purpose. The present embodiment, as shown in Fig. 9, divides further the burners at the same height (stage) into three groups of one on the left, one on the right, and two at the center. And, so as to enable to adjust the oxygen flow rate and circulation flue gas flow rate for each group, the pipes of oxygen and circulation flue gas and respective flow rate regulating valves are installed.

And, the oxygen flow rate decision device 136 transmits an oxygen flow rate signal to the oxygen flow rate adjustment device 141. The oxygen flow rate adjustment device 141 has a function of changing the oxygen flow rate for each group of each burner stage without changing the overall oxygen flow rate of each burner stage. Further, the circulation flue gas flow rate adjustment device 142 also has a similar function.

Therefore, in addition to the adjustment of the heat absorption amount in the direction of the furnace height, the heat absorption amount in the transverse direction can be adjusted. Namely, the circulation flue gas flow rates supplied to the left burners 210a, 220a, and 225a of each burner stage are distributed more than those of the right burners 210c, 220c, and 225c, thus an operation so to reduce relatively the oxygen concentration on the left side is performed. As a result, the gas temperature on the left side of the furnace lowers compared with that on the right side, so that the deviation between the left and right in the steam temperature distribution can be suppressed.

Furthermore, the fuel flow rate can be set for each burner group shown in Fig. 9 and the fuel flow rate can be distributed so that the fuel flow rate supplied to the burner on the left side is relatively reduced than the fuel flow rate supplied to the burner on the right side.

In the present embodiment, the two burners at the center are assumed as the same group and are controlled so as to obtain the same oxygen flow rate and circulation flue gas flow rate. However, the pipes and flow rate regulating valves may be structured so as to set those flow rates for each burner. Further, according to the characteristics of the plant, the burners may be grouped in other combinations than the one shown in Fig. 9. As a result, in the present embodiment, the effect of smoothing the water wall exit steam temperature distribution can be obtained by adjusting the flow rates of oxygen and circulation flue gas as shown in Fig. 10.

As mentioned above, the present embodiment can change the oxygen concentration of gas supplied to the burners according to the installation position of each burner and can adjust the heat absorption amount of the water wall 230. And, the embodiment can suppress the deviation between the left and right burners in the temperature distribution of the water wall tubes composing the water wall 230.

Concretely, the present embodiment, keeping the total quantity of heat absorbed by the water wall 230 unchanged, suppresses a local deviation of heat absorption and levels the temperature distribution of the heat transmission pipe. Therefore, the possibility that the water pipe is damaged due to overheat and the boiler cannot be operated can be avoided. Further, the problem that the deterioration speed of a material is increased and the life span of the device is shortened can be avoided.

Therefore, with respect to the water wall 230, it is desirable to realize uniform heat absorption as far as possible independently of the location, that is, uniform temperature distribution.

### Embodiment 3

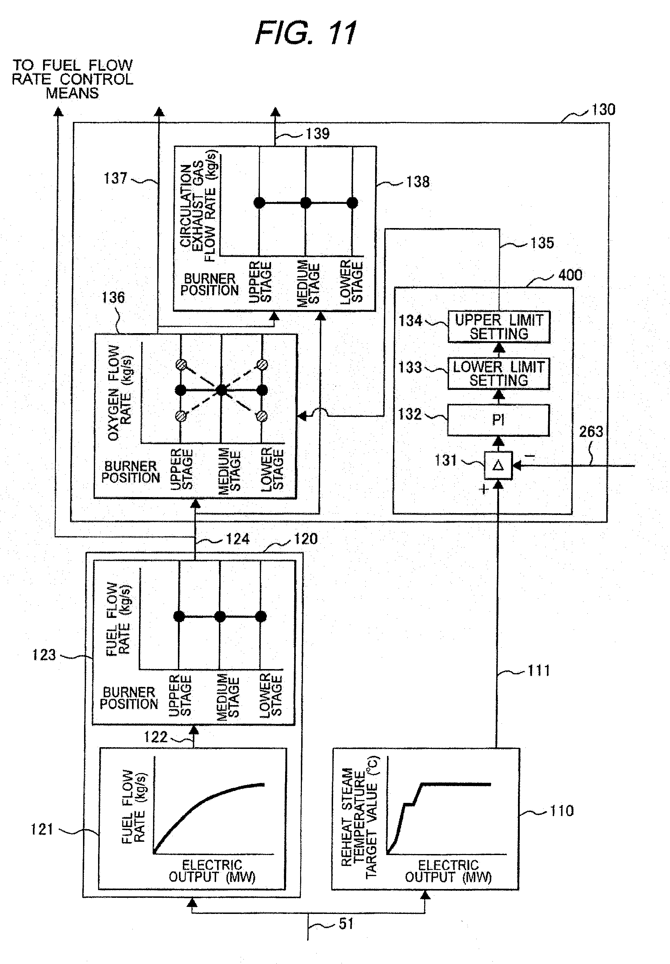

Fig. 11 shows a constitution example of the control apparatus in the third present embodiment of the present invention. The present embodiment is different in that the correction function 400 adjusts the oxygen flow rate of each burner stage from the first embodiment. In this case, if the circulation flue gas flow rate of each burner stage is constant, the oxygen concentration of each stage can be made different by the oxygen flow rate.

Further, if the difference in the oxygen flow rate between the upper stage burner and the lower stage burner is within a fixed range, the fuel flow rate of each burner stage can be made constant.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An oxyfuel combustion boiler plant comprising burners (210, 220, 225) arranged in a plurality of stages in a height direction of a furnace for injecting fuel and gas including oxygen and carbon dioxide, a boiler (200) having said burners (210, 220, 225), an oxygen supply system (401) for supplying oxygen to the burners (210, 220, 225), a flue gas circulation system (402) for returning a part of boiler flue gas discharged from the boiler (200) to the burners (210, 220, 225) as circulation flue gas (390), and a carbon dioxide collection device (350) for collecting carbon dioxide from a reminder of the boiler flue gas,
**characterized in that**
the oxyfuel combustion boiler plant further comprising:
an oxygen flow rate decision device (136) or a circulation flue gas flow rate decision device (138) capable of adjusting at least one of a flow rate of the oxygen and a flow rate of the circulation flue gas (390) supplied to the burners (210, 220, 225) for each of the burner stages.

2. An oxyfuel combustion boiler plant comprising burners (210, 220, 225) arranged in a plurality of stages in a height direction of a furnace for injecting fuel and gas including oxygen and carbon dioxide, a boiler (200) having said burners (210, 220, 225), an oxygen supply system (401) for supplying oxygen to the burners (210, 220, 225), a flue gas circulation system (402) for returning a part of boiler flue gas discharged from the boiler (200) to the burners (210, 220, 225) as circulation flue gas (390), and a carbon dioxide collection device (350) for collecting carbon dioxide from a reminder of the boiler flue gas,
**characterized in that**
the oxyfuel combustion boiler plant further comprising: a fuel flow rate decision device (120) for deciding a fuel flow rate supplied to the burners (210, 220, 225),
an oxygen flow rate decision device (136) or a circulation flue gas flow rate decision device (138) capable of adjusting at least one of a flow rate of the oxygen and a flow rate of the circulation flue gas (390) supplied to the burners (210, 220, 225) for each of the burner stages, and
a gas flow rate control device (130) having a function of controlling at least one of the oxygen flow rate decision device (136) and the circulation flue gas flow rate decision device (138) on the basis of the fuel flow rate by the fuel flow rate decision device (120) and adjusting the flow rate of the oxygen or the circulation flue gas.

3. The oxyfuel combustion boiler plant according to Claim 1, further comprising:
an oxygen flow rate regulating device or a circulation flue gas flow rate regulating device (212, 222, 227) capable of adjusting at least one of the flow rate of the oxygen and the flow rate of the circulation flue gas (390) supplied to the burners (210, 220, 225) for each of the burners (210, 220, 225) or for a plurality of groups including a combination of two or more burners.

4. An oxyfuel combustion boiler plant comprising burners (210, 220, 225) arranged in a plurality of stages in a height direction of a furnace for injecting fuel and gas including oxygen and carbon dioxide, a boiler (200) having said burners (210, 220, 225), an oxygen supply system (401) for supplying oxygen to the burners (210, 220, 225), a flue gas circulation system (402) for returning a part of boiler flue gas discharged from the boiler (200) to the burners (210, 220, 225) as circulation flue gas (390), a carbon dioxide collection device (350) for collecting carbon dioxide from a reminder of the boiler flue gas, and a reheater (270, 260) for reheating steam,
**characterized in that**
the oxyfuel combustion boiler plant further comprising:
a reheater temperature measuring device (232) for measuring a reheater pipe temperature of the reheater (270, 260) or a temperature of steam flowing through said pipe,
an oxygen flow rate decision device (136) or a circulation flue gas flow rate decision device (138) capable of adjusting at least one of a flow rate of the oxygen and a flow rate of the circulation flue gas (390) supplied to the burners (210, 220, 225) independently for each of the burner stages, and
a gas flow rate control device (130) having a function, on the basis of a deviation amount between the preheater pipe temperature measured by the reheater temperature measuring device (232) or the temperature of the steam flowing through the pipe and a target value thereof, of controlling at least one of the oxygen flow rate decision device (136) and the circulation flue gas flow rate decision device (138), thereby adjusting the flow rate of the oxygen or the circulation flue gas (390).

5. The oxyfuel combustion boiler plant according to Claim 4, further, comprising a gas flow rate control device for:
controlling, when the reheater pipe temperature measured by the reheater temperature measuring device (232) or the temperature of the steam flowing through the pipe is higher than the target value, so as to make, among said burners (210, 220, 225) of a plurality of stages, the flow rate or concentration of the oxygen of a lower stage burner relatively higher than that of an upper stage burner, the oxygen flow rate decision device (136) or the flue gas flow rate decision device (138), thereby adjusting the flow rate of the oxygen or the circulation flue gas (390), and
controlling, when the reheater pipe temperature measured by the reheater temperature measuring device (232) or the temperature of the steam flowing through the pipe is lower than the target value, so to make, among said burners (210, 220, 225) of the plurality of stages, the flow rate or concentration of the oxygen of the upper stage burner relatively higher than that of the lower stage burner, the oxygen flow rate decision device (136) or the flue gas flow rate decision device (138), thereby adjusting the flow rate of the oxygen or the circulation flue gas (390).

6. A control method for an oxyfuel combustion boiler plant comprising burners (210, 220, 225) arranged in a plurality of stages in a height direction of a furnace for injecting fuel and gas including oxygen and carbon dioxide, a boiler (200) having said burners (210, 220, 225), an oxygen supply system (401) for supplying oxygen to the burners (210, 220, 225), a flue gas circulation system (402) for returning a part of boiler flue gas discharged from the boiler (200) to the burners (210, 220, 225) as circulation flue gas (390), a carbon dioxide collection device (350) for collecting carbon dioxide from a reminder of the boiler flue gas, and a reheater (270, 260) for reheating steam, comprising:
a first step of measuring a reheater pipe temperature of the reheater or a temperature of steam flowing through said pipe,
a second step of obtaining a deviation amount between the reheater pipe temperature or the temperature of the steam flowing through the pipe and a target value thereof, and
a third step of adjusting, on the basis of the deviation amount, at least one of a flow rate of the oxygen and a flow rate of the circulation flue gas (390) supplied to the burners (210, 220, 225) independently for each of the burner stages.

7. The control method for an oxyfuel combustion boiler plant according to Claim 6, further comprising:
a fourth step of adjusting, when the reheater pipe temperature or the temperature of the steam flowing through the pipe is higher than the target value, so as to make, among the burners (210, 220, 225) of said plurality of stages, the flow rate or concentration of the oxygen of a lower stage burner relatively higher than that of an upper stage burner, the flow rate of the oxygen or the circulation flue gas (390).

8. The control method for an oxyfuel combustion boiler plant according to Claim 6, further comprising:
a fourth step of adjusting, when the reheater pipe temperature or the temperature of the steam flowing through the pipe is lower than the target value, so as to make, among the burners (210, 220, 225) of the plurality of stages, the flow rate or concentration of the oxygen of an upper stage burner relatively higher than that of a lower stage burner, the flow rate of the oxygen or the circulation flue gas (390).
